# EUROPÄISCHE PATENTSCHRIFT

(11) **EP 1 182 854 B1**
(45) Veröffentlichungstag und Bekanntmachung des Hinweises auf die Patenterteilung: **12.05.2004**
(21) Anmeldenummer: 01250295.1
(22) Anmeldetag: 16.08.2001
(51) Int. Cl.: H04M 3/42, H04Q 3/00

(54) **Verfahren und Anordnung zum Herstellen von gewichteten Kommunikationsverbindungen**
Method and apparatus for production of weighted communication links
Procédé et dispositif pour la production de liaisons pondérées de communication

(30) Priorität: 25.08.2000 DE 10043264
(43) Veröffentlichungstag der Anmeldung: 27.02.2002
(73) Patentinhaber: SIEMENS AKTIENGESELLSCHAFT, 80333 München (DE)
(72) Erfinder: Aschir, Alexander, 13581 Berlin (DE)

(56) Entgegenhaltungen:
- US-A- 5 206 903
- US-A- 5 812 656

## Beschreibung

Die Erfindung betrifft ein Verfahren zum Herstellen einer Kommunikationsverbindung in einem Kommunikationsnetz von einem Kommunikationsendgerät zu einem Ziel-Kommunikationsendgerät, bei dem der Kommunikationsverbindung eine Wichtung zugeordnet wird und eine bereits bestehende Alt-Kommunikationsverbindung zu dem Ziel-Kommunikationsendgerät unterbrochen und die Kommunikationsverbindung von dem Kommunikationsendgerät zu dem Ziel-Kommunikationsendgerät aufgebaut wird, wenn die Kommunikationsverbindung eine höhere Wichtung aufweist als die Alt-Kommunikationsverbindung. Im Rahmen dieser Erfindung wird unter "Herstellen" einer Kommunikationsverbindung sowohl der Aufbau der Kommunikationsverbindung als auch das Fortsetzen (Betreiben, Aufrechterhalten) der Kommunikationsverbindung verstanden. Ein derartiges Verfahren ist aus der Druckschrift "GSM 02.67 Digital cellular telecommunications system (Phase 2+); enhanced Multi-Level Precedence and Pre-emption service(eMLPP) - Stage 1 (GSM 02.67)" Version 5.0.1 vom Juli 1996 der Organisation ETSI (European Telecommunications Standards Institute) insbesondere aus der Seite 12, Kap. 5.8 und 5.9 bekannt.

Bei diesem Verfahren werden Wichtungen (auch Prioritätsstufen oder "Priority Level" genannt) von Kommunikationsverbindungen (Rufen) vorgenommen. Kommunikationsverbindungen einer höheren Wichtung (Prioritätsstufen) können bestehende Rufe einer niedrigeren Wichtung unterbrechen. Dieses Verfahren eMLPP wird in Mobilfunknetzen angewandt. In leitungsgebundenen Netzen wird ein ähnliches Verfahren angewandt, welches als "MLPP" ("Multi-Level Precedence and Pre-emption service") bezeichnet wird. Weiterhin betrifft die Erfindung eine Anordnung zur Durchführung des o.g. Verfahrens.

Ein solches Verfahren ist aus dem Dokument US 5,812,656 bekannt.

Der Erfindung liegt die Aufgabe zugrunde, ein Verfahren und eine Anordnung anzugeben, mit denen das Herstellen von gewichteten Kommunikationsverbindungen verbessert wird.

Diese Aufgabe wird erfindungsgemäß dadurch gelöst, dass bei einem Verfahren der oben genannten Art während des Herstellens der Kommunikationsverbindung netzseitig deren Wichtung geändert wird, wenn die Kommunikationsverbindung gegenüber der zunächst zugeordneten Wichtung nachrangig oder vorrangig herzustellen ist. Hierbei ist insbesondere vorteilhaft, dass die Wichtung der Kommunikationsverbindung auch dann geändert werden kann, wenn erst z.B. nach Zuordnung der Wichtung erkannt wird, dass die Kommunikationsverbindung vorrangig oder nachrangig herzustellen ist.

Das erfindungsgemäße Verfahren kann derart ausgestaltet sein, dass anhand einer Zieladresse der Kommunikationsverbindung erkannt wird, ob die Kommunikationsverbindung nachrangig oder vorrangig herzustellen ist. Dies ist deshalb vorteilhaft, weil aus der Zieladresse der Kommunikationsverbindung in einfacher Weise erkannt werden kann, ob die Kommunikationsverbindung nachrangig oder vorrangig herzustellen ist. So können beispielsweise Kommunikationsverbindungen mit ausgezeichneten Zieladressen vorrangig herzustellen sein bzw. Kommunikationsverbindungen mit anderen ausgezeichneten Zieladressen nachrangig herzustellen sein.

Das erfindungsgemäße Verfahren kann auch derart ausgestaltet sein, dass die Wichtung der Kommunikationsverbindung erhöht wird, wenn diese vorrangig herzustellen ist. Durch die Erhöhung der Wichtung wird ermöglicht, die Kommunikationsverbindung vorrangig herzustellen.

Das erfindungsgemäße Verfahren kann auch derart ausgestaltet sein, dass die Wichtung der Kommunikationsverbindung verringert wird, wenn diese nachrangig herzustellen ist. Durch die Verringerung der Wichtung der Kommunikationsverbindung wird ein nachrangiges Herstellen dieser Kommunikationsverbindung ermöglicht, so dass evtl. bereits bestehende Kommunikationsverbindungen unbeeinflusst beendet werden können.

Das erfindungsgemäße Verfahren kann auch derart ausgestaltet sein, dass anhand einer in einem Nummernplan des Kommunikationsnetzes auftretenden Zieladresse der Kommunikationsverbindung erkannt wird, ob die Kommunikationsverbindung nachrangig oder vorrangig herzustellen ist. Dabei ist insbesondere vorteilhaft, dass - da in solchen Nummernplänen beliebige Zieladressen z.B. zu vorrangig herzustellenden Kommunikationverbindungen zugehörig sein können - bei der Nutzung dieser Nummernpläne die Wichtung von Kommunikationsverbindungen nach ihrer Zuordnung geändert werden kann. Derartige Nummernpläne können beispielsweise sog. "private Nummernpläne" sein, die z.B. in Unternehmen zur an die Unternehmensstruktur angepaßten Kommunikation verwendet werden.

Das erfindungsgemäße Verfahren kann auch derart ausgestaltet sein, dass die Wichtung der Kommunikationsverbindung erhöht wird, wenn die Kommunikationsverbindung als Notruf-Verbindung erkannt wird. Dadurch können Notrufe besonders schnell hergestellt werden, da gegebenenfalls bestehende Alt-Kommunikationsverbindungen bei Auftreten eines Notrufes unterbrochen werden können.

Das erfindungsgemäße Verfahren kann auch derart ausgestaltet sein, dass von einem intelligenten Knoten eines eine Struktur eines Intelligenten Netzes (IN) aufweisenden Kommunikationsnetzes erkannt wird, ob die Kommunikationsverbindung nachrangig oder vorrangig herzustellen ist. Dies ist deshalb vorteilhaft, weil sich mit intelligenten Netzen relativ schnell und einfach die Funktionalität von Kommunikationsnetzen erweiternde Dienste, wie z.B. das erfindungsgemäße Verfahren, realisieren lassen.

Das erfindungsgemäße Verfahren kann auch derart ausgestaltet sein, dass die Änderung der Wichtung von dem intelligenten Knoten an einen Dienstevermittlungspunkt des Kommunikationsnetzes mittels einer erweiterten INAP-Nachricht "Connect" mitgeteilt wird. Dabei ist vorteilhaft, dass lediglich durch eine Erweiterung der Nachricht "Connect" die Änderung der Wichtung mitgeteilt werden kann und keine zusätzliche neue Nachricht verwendet werden braucht.

Eine Anordnung zur Durchführung des erfindungsgemäßen Verfahrens weist Erkennungsmittel auf zum Erkennen, ob eine Kommunikationsverbindung nachrangig oder vorrangig herzustellen ist und Änderungsmittel auf zum Ändern der Wichtung der Kommunikationsverbindung. Diese erfindungsgemäße Anordnung hat insbesondere den Vorteil, dass bei Erkennen einer Nachrangigkeit oder Vorrangigkeit der Kommunikationsverbindung durch die Anordnung von der Anordnung die Wichtung der Kommunikationsverbindung geändert werden kann.

Die erfindungsgemäße Anordnung kann auch derart ausgestaltet sein, dass die Erkennungsmittel aus einer Zieladresse der Kommunikationsverbindung erkennen, ob die Kommunikationsverbindung nachrangig oder vorrangig herzustellen ist. Hierbei ist insbesondere vorteilhaft, dass sich die Nachrangigkeit oder Vorrangigkeit einer Kommunikationsverbindung oft einfach aus der Zieladresse erkennen läßt, wenn ausgezeichneten Zieladressen eine Nachrangigkeit bzw. Vorrangigkeit zugeordnet ist.

Die erfindungsgemäße Anordnung kann auch derart ausgestaltet sein, dass die Erkennungsmittel einen intelligenten Knoten eines eine Struktur eines Intelligenten Netzes (IN) besitzenden Kommunikationsnetzes aufweisen. Intelligente Knoten von intelligenten Netzen lassen sich vorteilhaft als Erkennungsmittel einsetzen, da sie schnell und einfach für unterschiedliche Aufgaben angepasst werden können.

Die erfindungsgemäße Anordnung kann auch derart ausgestaltet sein, dass die Änderungsmittel einen intelligenten Knoten eines eine Struktur eines Intelligenten Netzes (IN) besitzenden Kommunikationsnetzes aufweisen. Hierbei kann vorteilhafterweise beispielsweise der bereits als Erkennungsmittel eingesetzte intelligente Knoten ebenso als Änderungsmittel eingesetzt werden.

Die erfindungsgemäße Anordnung kann ebenso als Änderungsmittel einen Dienstevermittlungspunkt des Kommunikationsnetzes aufweisen.

Zur weiteren Erläuterung der Erfindung ist in
Figur 1 als Ausführungsbeispiel ein Ausschnitt aus einem Kommunikationsnetz mit einem Kommunikationsendgerät und einem Ziel-Kommunikationsendgerät und in
Figur 2 als weiteres Ausführungsbeispiel ein Ausschnitt aus einem leitungsgebundenen Kommunikationsnetz mit einem Kommunikationsendgerät und einem Ziel-Kommunikationsendgerät dargestellt.

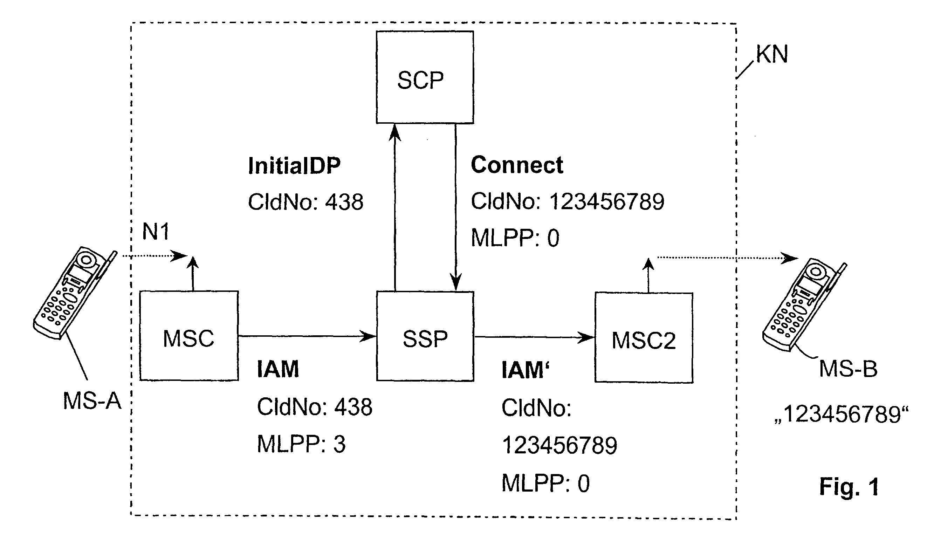

Bei dem in Figur 1 ausschnittsweise dargestellten Kommunikationsnetz KN handelt es sich in dem Ausführungsbeispiel um ein Funk-Kommunikationsnetz (Mobilfunknetz).

Einem Kommunikationsendgerät MS-A ist mindestens zeitweise eine Maximal-Wichtung zugewiesen. Wird von diesem Kommunikationsendgerät MS-A aus eine Kommunikationsverbindung hergestellt (ein Ruf aufgebaut), dann wird der Kommunikationsverbindung eine Wichtung zugeordnet, die kleiner oder gleich der Maximal-Wichtung ist. Von dem Kommunikationsendgerät MS-A, das im Ausführungsbeispiel durch ein Mobiltelefon dargestellt ist, wird eine z.B. innerhalb eines privaten Nummernplanes gültige Zieladresse "438" angewählt. Ein solcher privater Nummernplan wird beispielsweise in Unternehmen verwendet, die ihre Zieladressen (z.B. ihre Telefon-Rufnummern) nach unternehmensintern gültigen Regeln aufbauen und katalogisieren. Solche privaten Nummernpläne existieren beispielsweise für Bahn-Unternehmen oder Polizeiorganisationen. Tabelle 1 zeigt beispielhaft einen Ausschnitt aus einem Rufnummernplan, der z.B. bei den europäischen Bahnen im Rahmen des Systems "GSM-Railway" angewendet wird. Aus dieser Tabelle geht hervor, dass die Zieladresse "438" eine Notrufnummer ("Railway Emergency Calls") darstellt.

Tabelle 2 zeigt ausschnittsweise ein Ausführungsbeispiel von Zuordnungen von Wichtungen ("Priority level") zu verschiedenen Kommunikationsverbindungstypen (vgl. den o.g. Standard "GSM 02.67" S. 10). Die Wichtungen 4 bis 0 werden für Kommunikationsverbindungen von Benutzern des Verfahrens eMLPP vergeben; wobei die Wichtung 4 das kleinste Gewicht (die kleinste Priorität) besitzt und die Wichtung 0 das größte Gewicht (die größte Priorität). Die Wichtung 0 wird in diesem Beispiel für Notruf-Kommunikationsverbindungen ("TS12 Emergency calls") genutzt.

In Figur 1 wird auf die Anwahl der Zieladresse "438" hin in bekannter Weise eine Nachricht N1 unter Benutzung einer Funkübertragungsstrecke zu einer Mobilvermittlungsstelle MSC gesendet. Dem Kommunikationsendgerät MS-A sei in diesem Beispiel eine Maximal-Wichtung der Höhe 3 zugeordnet. Dementsprechend wird der Kommunikationsverbindung (dem Ruf), der von dem Kommunikationsendgerät MS-A ausgeht, eine Wichtung der Höhe 3 zugeordnet, die in diesem beispielhaften Fall mit der Höhe der Maximal-Wichtung übereinstimmt. Mit der Nachricht N1 wird u.a. die Wichtung 3 und die Zieladresse zu der Mobilvermittlungsstelle MSC übertragen.

Daraufhin sendet die Mobilvermittlungsstelle MSC eine Nachricht IAM an einen Dienstevermittlungspunkt SSP. Die Nachrich IAM ("Initial Address Message") enthält unter anderem als Parameter "called number"("CldNo") die gewählte Zieladresse "438" und als Parameter "MLPP" die Wichtung "3". Der Dienstevermittlungspunkt SSP erkennt aus der Zieladresse "CldNo", dass es sich bei dieser Kommunikationsverbindung um eine Notruf-Verbindung handelt, da in dem privaten Nummernplan der Zieladresse "438" eine Notruffunktion zugewiesen ist.

Daraufhin sendet der Dienstevermittlungspunkt SSP eine Nachricht "InitialDP" (Initial Detection Point) an einen intelligenten Knoten SCP. Die Nachricht "InitialDP" und die weiter unten in diesem Ausführungsbeispiel genutzte Nachricht "Connect" ist beispielsweise in der Druckschrift "ETS 300 374-1 Intelligent Network (IN); Intelligent Network Capability Set 1 (CS1); Core Intelligent Network Application Protocol (INAP); Part 1: Protccol specification" vom September 1994 der Organisation "ETSI" beschrieben. Die Nachricht "InitialDP" enthält als Parameter "CldNo" die Zieladresse "438"; sie kann auch die Wichtung "3" enthalten (in Fig. 1 nicht dargestellt). Der intelligente Knoten SCP liest beispielsweise aus einer in der Figur nicht dargestellten Datenbank aus, welches Kommunikationsendgerät zu dem entsprechenden Zeitpunkt der Notruf-Zieladresse "438" zugeordnet ist. In diesem Beispiel sei der Notruf-Zieladresse "438" ein Mobil-Kommunikationsendgerät MS-B mit einer Zieladresse "123456789" zugeordnet.

An dieser Stelle soll darauf hingewiesen werden, dass der Notruf-Zieladresse "438" selbstverständlich auch ein Mobil-Kommunikationsendgerät MS-B mit einer Zieladresse "438" zugeordnet sein kann; in diesem Fall würde sich also die Zieladresse nicht ändern. Allerdings ist es oft vorteilhaft, z.B. einer sich nicht ändernden Notruf-Zieladresse in Abhängigkeit von der Zeit und dem Ort der Kommunikation verschiedene Zieladressen von Kommunikationsendgeräten zuzuordnen (z.B. kann dann ein am Wochenende auftretender Notruf zu einem anderen Empfänger geleitet werden als ein an einem Arbeitstag auftretender Notruf. Ebenso kann es von Vorteil sein, statt einer schwer einprägsamen Zieladresse eines Kommunikationsendgeräten ("123456789") eine leicher einprägsame Zieladresse ("438") für Notrufe zu benutzen.

In diesem Ausführungsbeispiel sendet nach der Zuordnung der Zieladresse "123456789" der intelligente Knoten SCP eine Nachricht "Connect" an den Dienstevermittlungspunkt SSP zurück. Diese Nachricht "Connect" enthält als Parameter "CldNo" die Zieladresse "123456789" des Ziel-Kommunikationsendgerätes MS-B. Da der intelligente Knoten SCP erkannt hat, dass die Kommunikationsverbindung eine Notrufverbindung darstellt, wird dieser Verbindung die hohe Wichtung "0" zugeordnet, damit die Verbindung vorrangig hergestellt werden kann. Daher enthält die Nachricht "Connect" als weiteren zusätzlichen Parameter "MLPP" die Wichtung "0". Nach dem Empfang der Nachricht "Connect" überschreibt der Dienstevermittlungspunkt SSP nun in der von der Mobilvermittlungsstelle MSC empfangenen Nachricht IAM den Inhalt des Parameters "CldNo" mit der Zieladresse "123456789" des Ziel-Kommunikationsendgerätes MS-B. Ebenso überschreibt er den Inhalt des Parameters MLPP mit der Wichtung "0". Die veränderte Nachricht IAM' wird nun vom Dienstevermittlungspunkt SSP an die zweite Mobilvermittlungsstelle MSC2 gesendet. Von dieser zweiten Vermittlungsstelle MSC2 aus wird die Kommunikationsverbindung in bekannter Weise zu dem Ziel-Kommunikationsendgerät MS-B unter Nutzung eines Funkkanals hergestellt. Sollte zu diesem Zeitpunkt bereits eine bestehende Alt-Kommunikationsverbindung von einem in der Figur nicht dargestellten weiteren Kommunikationsendgerät zu dem Ziel-Kommunikationsendgerät MS-B bestehen und sollte diese Alt-Kommunikationsverbindung eine geringere Wichtung haben als die Wichtung 0 der Kommunikationsverbindung (Notruf-Verbindung), so wird die Alt-Kommunikationsverbindung zu dem Ziel-Kommunikationsendgerät MS-B unterbrochen und die Kommunikationsverbindung (Notruf-Verbindung) hergestellt.

Als Ausführungsbeispiel ist in Figur 1 ein Ausschnitt aus einem Mobilkommunikationsnetz dargestellt. Das erfindungsgemäße Verfahren bzw. die erfindungsgemäße Anordnung beschränkt sich jedoch nicht auf Mobilkommunikationsnetze. Ebenso können leitungsgebundene Kommunikationsnetze zum Einsatz kommen.

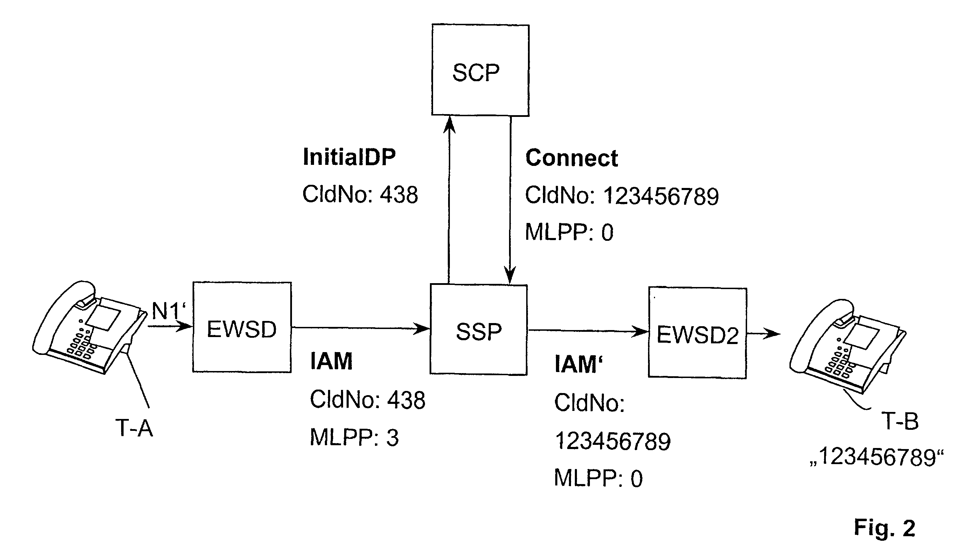

Figur 2 zeigt einen Ausschnitt aus einem leitungsgebundenen Kommunikationsnetz. Im Unterschied zu Figur 1 ist anstelle der Mobilvermittlungsstelle MSC eine Vermittlungsstelle EWSD und anstelle der zweiten Mobilvermittlungsstelle MSC2 eine zweite Vermittlungsstelle EWSD2 angeordnet. Dementsprechend werden leitungsgebundene Kommunikationsendgeräte T-A (Telefon A) und T-B (Telefon B) eingesetzt. Ansonsten entspricht das Verfahren dem im Zusammenhang mit Figur 1 dargestellten Verfahren und die Anordnung der in Figur 1 dargestellten Anordnung. Die gewählten Wichtungen ("Priority level") sind nur als Beispiel zu verstehen, sie können auch andere Werte annehmen als in den Ausführungsbeispielen.

## Patentansprüche

1. Verfahren zum Herstellen einer Kommunikationsverbindung in einem Kommunikationsnetz (KN) von einem Kommunikationsendgerät (MS-A, T-A) zu einem Ziel-Kommunikationsendgerät (MS-B, T-B), bei dem
- der Kommunikationsverbindung eine Wichtung ("MLPP:3") zugeordnet wird und
- eine bereits bestehende Alt-Kommunikationsverbindung zu dem Ziel-Kommunikationsendgerät (MS-B, T-B) unterbrochen und die Kommunikationsverbindung von dem Kommunikationsendgerät (MS-A, T-A) zu dem Ziel-Kommunikationsendgerät (MS-B, T-B) aufgebaut wird, wenn die Kommunikationsverbindung eine höhere Wichtung aufweist als die Alt-Kommunikationsverbindung,
**dadurch gekennzeichnet, dass**
- während des Herstellens der Kommunikationsverbindung netzseitig deren Wichtung ("MLPP:3") geändert wird, wenn die Kommunikationsverbindung gegenüber der zunächst zugeordneten Wichtung ("MLPP:3") nachrangig oder vorrangig herzustellen ist.

2. Verfahren nach Anspruch 1,
**dadurch gekennzeichnet, dass**
- anhand einer Zieladresse ("438") der Kommunikationsverbindung erkannt wird, ob die Kommunikationsverbindung nachrangig oder vorrangig herzustellen ist.

3. Verfahren nach Anspruch 1 oder 2,
**dadurch gekennzeichnet, dass**
- die Wichtung ("MLPP:3") der Kommunikationsverbindung erhöht wird, wenn diese vorrangig herzustellen ist.

4. Verfahren nach einem der Ansprüche 1 bis 3,
**dadurch gekennzeichnet, dass**
- die Wichtung ("MLPP:3") der Kommunikationsverbindung verringert wird, wenn diese nachrangig herzustellen ist.

5. Verfahren nach einem der Ansprüche 2 bis 4,
**dadurch gekennzeichnet, dass**
- anhand einer in einem Nummernplan des Kommunikationsnetzes (KN) auftretenden Zieladresse ("438") der Kommunikationsverbindung erkannt wird, ob die Kommunikationsverbindung nachrangig oder vorrangig herzustellen ist.

6. Verfahren nach einem der Ansprüche 2 bis 5,
**dadurch gekennzeichnet, dass**
- die Wichtung ("MLPP:3") der Kommunikationsverbindung erhöht wird, wenn die Kommunikationsverbindung als Notruf-Verbindung erkannt wird.

7. Verfahren nach einem der vorhergehenden Ansprüche,
**dadurch gekennzeichnet, dass**
- von einem intelligenten Knoten (SCP) eines eine Struktur eines Intelligenten Netzes (IN) aufweisenden Kommunikationsnetzes (KN) erkannt wird, ob die Kommunikationsverbindung nachrangig oder vorrangig herzustellen ist.

8. Verfahren nach einem der Ansprüche 1 bis 6,
**dadurch gekennzeichnet, dass**
- die Änderung der Wichtung von einem intelligenten Knoten (SCP) eines eine Struktur eines Intelligenten Netzes (IN) aufweisenden Kommunikationsnetzes (KN) veranlasst wird.

9. Verfahren nach Anspruch 8,
**dadurch gekennzeichnet, dass**
- die Änderung der Wichtung von dem intelligenten Knoten (SCP) an einen Dienstevermittlungspunkt (SSP) des Kommunikationsnetzes mittels einer erweiterten INAP-Nachricht "Connect" mitgeteilt wird.

10. Anordnung zur Durchführung des Verfahrens nach einem der Ansprüche 1 bis 9, die
- Erkennungsmittel (SCP) aufweist zum Erkennen, ob eine Kommunikationsverbindung nachrangig oder vorrangig herzustellen ist und
- Änderungsmittel (SCP, SSP) aufweist zum Ändern der Wichtung ("MLPP:3") der Kommunikationsverbindung.

11. Anordnung nach Anspruch 10,
**dadurch gekennzeichnet, dass**
- die Erkennungsmittel (SCP) aus einer Zieladresse der Kommunikationsverbindung erkennen, ob die Kommunikationsverbindung nachrangig oder vorrangig herzustellen ist.

12. Anordnung nach Anspruch 10 oder 11,
**dadurch gekennzeichnet, dass**
- die Erkennungsmittel einen intelligenten Knoten (SCP) eines eine Struktur eines Intelligenten Netzes (IN) besitzenden Kommunikationsnetzes (KN) aufweisen.

13. Anordnung nach einem der Ansprüche 10 bis 12,
**dadurch gekennzeichnet, dass**
- die Änderungsmittel einen intelligenten Knoten (SCP) eines eine Struktur eines Intelligenten Netzes (IN) besitzenden Kommunikationsnetzes (KN) aufweisen.

14. Anordnung nach einem der Ansprüche 10 bis 13,
**dadurch gekennzeichnet, dass**
- die Änderungsmittel einen Dienstevermittlungspunkt (SSP) des Kommunikationsnetzes aufweisen.

## Claims

1. Method for setting up a communication link in a communication network (KN) from a communication terminal (MS-A, T-A) to a destination communication terminal (MS-B, T-B), in which
- the communication link is allocated a weighting ("MLPP:3"), and
- an already existing old communication link to the destination communication terminal (MS-B, T-B) is interrupted and the communication link from the communication terminal (MS-A, T-A) to the destination communication terminal (MS-B, T-B) is set up if the communication link has a higher weighting than the old communication link,
**characterized in that**
- while the communication link is being set up, the weighting ("MLPP:3") thereof is changed by the network if the communication link needs to be set up with lower priority or with higher priority with respect to the first-allocated weighting ("MLPP:3").

2. Method according to Claim 1,
**characterized in that**
- a destination address ("438") for the communication link is used to detect whether the communication link needs to be set up with lower priority or with higher priority.

3. Method according to Claim 1 or 2,
**characterized in that**
- the weighting ("MLPP:3") of the communication link is increased if said communication link needs to be set up with higher priority.

4. Method according to one of Claims 1 to 3,
**characterized in that**
- the weighting ("MLPP:3") of the communication link is reduced if said communication link needs to be set up with lower priority.

5. Method according to one of Claims 2 to 4,
**characterized in that**
- a destination address ("438"), appearing in a number plan for the communication network (KN), for the communication link is used to detect whether the communication link needs to be set up with lower priority or with higher priority.

6. Method according to one of Claims 2 to 5,
**characterized in that**
- the weighting ("MLPP:3") of the communication link is increased if the communication link is detected to be an emergency call.

7. Method according to one of the preceding claims,
**characterized in that**
- an intelligent node (SCP) of a communication network (KN) having a structure of an Intelligent Network (IN) detects whether the communication link needs to be set up with lower priority or with higher priority.

8. Method according to one of Claims 1 to 6,
**characterized in that**
- the weighting is changed by an intelligent node (SCP) of a communication network (KN) having a structure of an Intelligent Network (IN).

9. Method according to Claim 8,
**characterized in that**
- the change to the weighting is notified by the intelligent node (SCP) to a service switching point (SSP) of the communication network using an extended INAP message "Connect".

10. Arrangement for carrying out the method according to one of Claims 1 to 9, which
- has detection means (SCP) for detecting whether a communication link needs to be set up with lower priority or with higher priority, and
- has changing means (SCP, SSP) for changing the weighting ("MLPP:3") of the communication link.

11. Arrangement according to Claim 10,
**characterized in that**
- the detection means (SCP) detect from a destination address for the communication link whether the communication link needs to be set up with lower priority or with higher priority.

12. Arrangement according to Claim 10 or 11,
**characterized in that**
- the detection means have an intelligent node (SCP) of a communication network (KN) having a structure of an Intelligent Network (IN).

13. Arrangement according to one of Claims 10 to 12,
**characterized in that**
- the changing means have an intelligent node (SCP) of a communication network (KN) having a structure of an Intelligent Network (IN).

14. Arrangement according to one of Claims 10 to 13,
**characterized in that**
- the changing means have a service switching point (SSP) of the communication network.

## Revendications

1. Procédé pour établir une liaison de communication dans un réseau de communication (KN) d'un terminal de communication (MS-A, T-A) à un terminal de communication destinataire (MS-B, T-B), dans lequel
- on attribue une pondération ("MLPP : 3") à la liaison de communication, et
- on interrompt une ancienne liaison de communication déjà existante vers le terminal de communication destinataire (MS-B, T-B) et on établit la liaison de communication du terminal de communication (MS-A, T-A) vers le terminal de communication destinataire (MS-B, T-B) lorsque la liaison de communication a une pondération supérieure à celle de l'ancienne liaison de communication,
**caractérisé par le fait que**
- pendant l'établissement de la liaison de communication du côté du réseau, on change la pondération ("MLPP : 3") de celle-ci lorsque la liaison de communication est à établir avec une priorité inférieure ou supérieure par rapport à la pondération initialement attribuée ("MLPP : 3").

2. Procédé selon la revendication 1,
**caractérisé par le fait que**, à l'aide d'une adresse de destination ("438") de la liaison de communication, on reconnaît si la liaison de communication est à établir avec une priorité inférieure ou supérieure.

3. Procédé selon la revendication 1 ou 2,
**caractérisé par le fait qu'**on augmente la pondération ("MLPP : 3") de la liaison de communication si celle-ci est à établir avec une priorité supérieure.

4. Procédé selon l'une des revendications 1 à 3,
**caractérisé par le fait qu'**on diminue la pondération ("MLPP : 3") de la liaison de communication si celle-ci est à établir avec une priorité inférieure.

5. Procédé selon l'une des revendications 2 à 4,
**caractérisé par le fait que**, à l'aide d'une adresse de destination ("438"), apparaissant dans un plan de numéros du réseau de communication (KN), de la liaison de communication, on reconnaît si la liaison de communication est à établir avec une priorité inférieure ou supérieure.

6. Procédé selon l'une des revendications 2 à 5,
**caractérisé par le fait qu'**on augmente la pondération ("MLPP : 3") de la liaison de communication si la liaison de communication est reconnue comme étant une liaison d'appel d'urgence.

7. Procédé selon l'une des revendications précédentes,
**caractérisé par le fait qu'**un noeud intelligent (SCP) d'un réseau de communication (KN) ayant une structure d'un réseau intelligent (IN) reconnaît si la liaison de communication est à établir avec une priorité inférieure ou supérieure.

8. Procédé selon l'une des revendications 1 à 6,
**caractérisé par le fait qu'**un noeud intelligent (SCP) d'un réseau de communication (KN) ayant une structure d'un réseau intelligent (IN) provoque le changement de la pondération.

9. Procédé selon la revendication 8,
**caractérisé par le fait que** le noeud intelligent (SCP) informe du changement de la pondération un point de commutation de service (SSP) du réseau de communication au moyen d'un message INAP étendu "Connect".

10. Dispositif pour la mise en oeuvre du procédé selon l'une des revendications 1 à 9, qui comporte
- des moyens de reconnaissance (SCP) pour reconnaître si une liaison de communication est à établir avec une priorité inférieure ou supérieure, et
- des moyens de changement (SCP, SSP) pour changer la pondération ("MLPP : 3") de la liaison de communication.

11. Dispositif selon la revendication 10,
**caractérisé par le fait que** les moyens de reconnaissance (SCP) reconnaissent à partir d'une adresse de destination de la liaison de communication si la liaison de communication est à établir avec une priorité inférieure ou supérieure.

12. Dispositif selon la revendication 10 ou 11,
**caractérisé par le fait que** les moyens de reconnaissance comportent un noeud intelligent (SCP) d'un réseau de communication (KN) ayant une structure d'un réseau intelligent (IN).

13. Dispositif selon l'une des revendications 10 à 12,
**caractérisé par le fait que** les moyens de changement comportent un noeud intelligent (SCP) d'un réseau de communication (KN) ayant une structure d'un réseau intelligent (IN).

14. Dispositif selon l'une des revendications 10 à 13,
**caractérisé par le fait que** les moyens de changement comportent un point de commutation de service (SSP) du réseau de communication.
